# EUROPÄISCHE PATENTANMELDUNG

(11) **EP 4 349 568 A1**
(43) Veröffentlichungstag der Anmeldung: **10.04.2024**
(21) Anmeldenummer: 23200295.6
(22) Anmeldetag: 28.09.2023
(51) Int. Cl.: B29C 64/106, B29C 64/118, B29C 64/194, B29C 64/209, B29C 64/218, B29C 64/241, B29C 64/295, B33Y 10/00, B33Y 30/00, B33Y 40/00, B33Y 80/00

(54) **VORRICHTUNG UND VERFAHREN ZUR ADDITIVEN BAUTEILHERSTELLUNG**

(30) Priorität: 04.10.2022 DE 102022125491
(71) Anmelder: Simona AG, 55606 Kirn (DE)
(72) Erfinder: Baumann, Edwin, 77955 Ettenheimweiler (DE); Behr, Matthias, 77975 Ringsheim (DE); Groß, Michael, 55765 Birkenfeld (DE); Burkhart, Anne, 55122 Mainz (DE)
(74) Vertreter: advotec.

(57) **Zusammenfassung**

Die Erfindung betrifft eine Vorrichtung (01) zur additiven Herstellung eines, insbesondere rotationssymmetrischen, Bauteils (02), aufweisend eine in zumindest zwei Achsen verfahrbare Materialauftragseinrichtung (03) mit einem Extruder (04) und einer Düse (05) zum Auftrag eines Materialstrangs (06), wobei an der Materialauftragseinrichtung (03) ein Rotationskopf (07) mit einer Verdichtereinrichtung (08) zur Verdichtung eines Materialstrangs (06) und einer Heizeinrichtung (09) zur Erwärmung zumindest eines Materialauftragsbereichs (10) angeordnet ist, wobei der Rotationskopf (07) um die Düse (05) rotierbar ist, und wobei eine Regeleinrichtung (11) umfasst ist, die dazu eingerichtet ist, zumindest den Rotationskopf (07) und die Verdichtereinrichtung (08) und die Heizeinrichtung (09) zu regeln. Des Weiteren betrifft die Erfindung ein Verfahren zur additiven Herstellung eines, insbesondere rotationssymmetrischen, Bauteils (02), wobei mittels einer Materialauftragseinrichtung (03) zumindest ein Materialstrang (06) zur Erzeugung des Bauteils (02) schichtweise aufgebracht wird, sowie ein mit diesem Verfahren hergestelltes Bauteil (02).

## Beschreibung

Die Erfindung betrifft eine Vorrichtung zur additiven Herstellung eines, insbesondere rotationssymmetrischen, Bauteils, nach dem Oberbegriff des Anspruchs 1. Weiterhin betrifft die vorliegende Erfindung ein Verfahren zur additiven Herstellung eines, insbesondere rotationssymmetrischen, Bauteils. Zudem betrifft die Erfindung ein Bauteil, hergestellt mittels eines solchen Verfahrens.

Vorrichtungen zur additiven Herstellung eines Bauteils sind in der Technik bekannt, wobei die additive Herstellung auch als additive Fertigung, 3D-Druck oder generative Fertigung bezeichnet wird. Bekannte Vorrichtungen umfassen typischerweise eine als Druckkopf ausgebildete Materialauftragseinrichtung und einen Drucktisch, auf dem eine Druckplatte angeordnet sein kann. Ein Bauteil wird additiv hergestellt, indem der Druckkopf so konfiguriert wird, dass er ein Druckmaterial auf ausgewählte Stellen der Druckplatte aufbringt. Um eine Formgebung entsprechend dem zu fertigenden Bauteil zu erreichen, müssen der Druckkopf und die Druckplatte bzw. der Drucktisch gegeneinander beweglich sein. Gattungsgemäß wird diese Relativbewegung zueinander erreicht, indem der Drucktisch und/oder der Druckkopf mit linear bewegten Mitteln verbunden werden, die entlang entsprechend angeordneter Linearführungen linear beweglich sind. Dabei ist es bekannt, dass sich der Druckkopf in einer Ebene bewegen kann, die durch eine erste und eine zweite Linearführung definiert ist. Der Drucktisch ist an einer dritten Linearführung angebracht und entlang dieser senkrecht zur Ebene, in der der Druckkopf bewegt werden kann, beweglich. Beim schichtweisen Aufbau des Bauteils wird dann während der Bewegung des Druckkopfs in einer Ebene, in der Regel in der x-y-Ebene, zumindest ein Materialstrang zur Erstellung einer Schicht des Bauteils aufgebracht. Ist eine Schicht fertiggestellt, wird üblicherweise der Druckkopf senkrecht nach oben, also in z-Richtung bewegt, oder der Drucktisch senkrecht nach unten bewegt und der strangweise Materialauftrag in einer weiteren Schicht begonnen, so dass das Bauteil Schicht für Schicht in z-Richtung aufgebaut wird.

Insbesondere bei relativ großen Bauteilen bzw. relativ großen Bauräumen der additiven Herstellungsanlagen kann die Verbindung der mittels der Materialauftragseinrichtung abgelegten Materialstränge untereinander für bestimmte Anforderungen unzureichend sein, da beispielsweise die Anforderungen hinsichtlich Stabilität, Langlebigkeit und/oder Druckbeständigkeit nicht erfüllt werden können. Aufgrund des schichtweisen Aufbaus, gemeinhin in z-Richtung, ergeben sich Schwachstellen in den gattungsgemäß additiv gefertigten Bauteilen aufgrund der unzureichenden Verbindung der einzelnen Schichten. Dies kann beispielsweise dadurch hervorgerufen werden, dass die vorhergehende Schicht bereits erkaltet ist und daher keine Verbindung mit der nachfolgenden Schicht eingehen kann. Eine derartige unzureichende Form- und Druckstabilität ist jedoch insbesondere bei der Herstellung und Verwendung von rotationssymmetrischen Bauteilen, wie Rohren oder Rohrabschnitten, nachteilig.

Vor diesem Hintergrund liegt der vorliegenden Erfindung die Aufgabe zugrunde, eine Vorrichtung und ein Verfahren vorzuschlagen, die die Nachteile im Stand der Technik überwinden und die Herstellung form- und druckstabiler, insbesondere rotationssymmetrischer, Bauteile mittels additiver Fertigung ermöglichen.

Diese Aufgabe wird gelöst durch eine Vorrichtung zur additiven Herstellung eines, insbesondere rotationssymmetrischen, Bauteils, wobei die Vorrichtung eine in zumindest zwei Achsen verfahrbare Materialauftragseinrichtung mit einem Extruder und einer Düse zum Auftrag eines Materialstrangs aufweist.

Erfindungsgemäß zeichnet sich die Vorrichtung dadurch aus, dass an der Materialauftragseinrichtung ein Rotationskopf mit einer Verdichtereinrichtung zur Verdichtung eines Materialstrangs und einer Heizeinrichtung zur Erwärmung zumindest eines Materialauftragsbereichs angeordnet ist, wobei der Rotationskopf um die Düse rotierbar ist, und wobei eine Regeleinrichtung umfasst ist, die dazu eingerichtet ist, zumindest den Rotationskopf, insbesondere die Rotationsbewegung des Rotationskopfes, und die Verdichtereinrichtung, insbesondere die Verdichtung eines Materialstrangs, und die Heizeinrichtung, insbesondere die Heizleistung der Heizeinrichtung, zu regeln.

Im Rahmen der Erfindung betrifft der Begriff "additive Herstellung" eine Möglichkeit der Fertigung durch schichtweises Auftragen von Material, bevorzugt Kunststoffmaterial, in einer additiven Fertigungsvorrichtung ohne weitere Werkzeuge oder Formen. Der schichtweise Aufbau erfolgt anhand eines Datensatzes, welcher die geometrischen Daten der einzelnen Schichten des gewünschten Bauteils sowie weitere Parameter, wie beispielsweise Verarbeitungstemperatur, Schichthöhe oder Auflösung, enthält. Die Festigkeit eines derart additiv gefertigten Bauteils kann insbesondere von der Art der Füllung des Bauteils, dem sogenannten Infill, sowie der Verbindung der abgelegten Materialstränge und Schichten untereinander abhängig sein. Bevorzugt ist ein erfindungsgemäß hergestelltes Bauteil vollständig gefüllt, das heißt mit anderen Worten, dass die Bauteile mit einem Infill von 100% hergestellt sind.

Zur weiteren Definition der Erfindung wird davon ausgegangen, dass der Materialauftrag innerhalb einer Schicht in einer x-y-Ebene erfolgt, und der schichtweise Aufbau in der senkrecht zur x-y-Ebene verlaufenden z-Richtung erfolgt, so dass die einzelnen Schichten in z-Richtung übereinander angeordnet sind. Jedoch ist die Erfindung weder auf die genannte Nomenklatur noch auf die Verwendung eines kartesischen Koordinatensystems beschränkt. Bevorzugt wird ein kontinuierlicher Materialauftrag, zumindest innerhalb einer Schicht, mittels der Materialauftragseinrichtung der erfindungsgemäßen Vorrichtung ermöglicht, wodurch ein unerwünschter Abriss des Materialstrangs innerhalb einer Schicht des Bauteils vermieden werden kann.

Die erfindungsgemäße Vorrichtung beruht auf dem Grundgedanken, dass nach einem Materialauftrag in Form eines Materialstrangs, der aus einer Düse ausgegeben wird, dieser ausgegebene Materialstrang mittels der Verdichtereinrichtung verdichtet werden kann. Hierbei wird Druck auf den Materialstrang aufgebracht, insbesondere Druck von oben, das heißt aus der z-Richtung. Durch das Verdichten des aufgetragenen Materialstrangs wird dieser einerseits mit den in der x-y-Ebene angrenzenden, bereits aufgetragenen Materialsträngen verbunden und zudem durch die Druckaufbringung von oben mit der oder den unterhalb der aktuell zu fertigenden Schicht angeordneten Schichten des Bauteils verbunden. Bevorzugt ist die Verdichtereinrichtung dazu ausgebildet, einen definierten und variierbaren Druck auf den abgelegten Materialstrang aufzubringen. D.h. mit anderen Worten, dass die Druckaufbringung mittels der Verdichtereinrichtung einstellbar und an die Anforderungen, wie beispielsweise Materialstrangstärke, Material oder Bauraumtemperatur, anpassbar ist. Um eine ausreichende Verbindung herzustellen, hat es sich als erfindungswesentlich herausgestellt, dass die zu verbindenden Materialstränge bzw. Schichten des Bauteils noch nicht vollständig erkaltet und erstarrt sein dürfen. Daher ist zur Erwärmung zumindest eines Materialauftragsbereichs eine Heizeinrichtung am Rotationskopf erfindungsgemäß angeordnet, welche dazu dient, den Materialauftragsbereich, auf dem unmittelbar nachfolgend ein Materialstrang abgelegt werden soll, zu erwärmen, so dass eine stoffschlüssige Verbindung, bevorzugt eine Schweißverbindung, zwischen dem im Materialauftragsbereich angeordneten Material und dem aufgetragenen Materialstrang erfolgen kann. Bevorzugt erwärmt die Heizeinrichtung den Materialauftragsbereich auf die Schweißtemperatur des verarbeiteten Materials, wobei das eingesetzte Material bevorzugt ein thermoplastisches Material ist. Insbesondere ist die erfindungsgemäße Vorrichtung zur additiven Herstellung eines Bauteils aus einem teilkristallinen, bevorzugt einem unverstärkten teilkristallinen, Kunststoff geeignet. Teilkristalline Kunststoffe sind regelmäßig nicht mit gattungsgemäßen additiven Fertigungsvorrichtungen verarbeitbar, da teilkristalline Kunststoffe in einem engen Temperaturbereich von der Schmelze in den festen Zustand übergehen und eine höhere Verarbeitungsschwindung aufweisen. Daher ist das Verarbeitungsfenster kleiner als beispielsweise bei amorphen Kunststoffen.

Der Begriff "aktuell zu fertigende Schicht" oder "aktuelle Schicht" betrifft im Rahmen der Erfindung die Schicht, in der mittels der Materialauftragseinrichtung aktuell, also gegenwärtig, ein Materialstrang aufgebracht wird und die noch nicht fertiggestellt ist. Hingegen betrifft der Begriff "zuletzt fertiggestellte Schicht" im Rahmen der Erfindung die Schicht, die in Aufbaurichtung des Bauteils unmittelbar unterhalb der aktuell zu fertigenden Schicht zeitlich zuletzt aufgebracht wurde.

Unter dem Begriff "Materialauftragsbereich" wird im Rahmen der Erfindung der Bereich verstanden, in dem ein Materialstrang abgelegt wird, um das Bauteil zu erstellen. Wie bereits eingangs erläutert, kann die Materialauftragseinrichtung, welche zumindest einen Extruder und eine Düse aufweist, bevorzugt in der x-y-Ebene bewegbar sein und die zur Realisierung eines Bauteils notwendigen Schichten mittels der Düse, bevorzugt auf einer Druckplatte, welche in z-Richtung abgesenkt und/oder angehoben werden kann, oder auf den bereits zuvor fertiggestellten Schichten, ablegen. So wird nach Ablage einer Schicht die Druckplatte um eine Schichtdicke nach unten abgesenkt, so dass die Folgeschicht auf die vorhergehende Schicht aufgetragen werden kann. Mit anderen Worten wird das Bauteil Schicht für Schicht aufgebaut und jede Schicht durch Abfahren ebener Bahnkurven und gleichzeitiges Ablegen eines Materialstrangs durch die Materialauftragseinrichtung gefertigt. Mit dem Materialauftragsbereich ist im Rahmen der Erfindung der Bereich auf der Druckplatte oder den bereits erstellten Schichten des Bauteils bezeichnet, welcher von der Materialauftragseinrichtung als nächstes abgefahren wird. Die Größe des Materialauftragbereichs kann beispielsweise dem Radius oder dem Durchmesser des Rotationskopfs entsprechen, und die Breite mehrerer Materialstränge kann beispielsweise zumindest der Breite von zwei Materialsträngen entsprechen. Somit können durch Erwärmung des Materialauftragsbereichs sowohl ein Bereich des bereits erstellten Bauteils, insbesondere die zuletzt fertiggestellte Schicht des Bauteils, wobei auf dem Bereich des bereits erstellten Bauteils unmittelbar nachfolgend ein Materialstrang abgelegt werden soll, als auch die innerhalb der aktuellen Schicht bereits abgelegten und zum unmittelbar nachfolgend abzulegenden Materialstrang benachbarten Materialstränge erwärmt werden.

Erfindungsgemäß kann vorteilhafterweise zuerst der Materialauftragsbereich erwärmt werden, anschließend mittels der Materialauftragseinrichtung, insbesondere der Düse, ein Materialstrang aufgebracht werden und nachfolgend dieser Materialstrang zur Verbindung mit den benachbarten Materialsträngen bzw. der zuletzt fertiggestellten Schicht des Bauteils mit der Verdichtereinrichtung verdichtet werden. Hierzu ist der Rotationskopf an der verfahrbaren Materialauftragseinrichtung bevorzugt derart angeordnet, dass die Verdichtereinrichtung der Düse in Bewegungsrichtung der Düse der Düse nachgeführt wird und die Heizeinrichtung bzw. der Materialauftragsbereich in Bewegungsrichtung der Düse voranläuft.

Um eine ausreichende Verdichtung des Materialstrangs und effiziente Erwärmung des Materialauftragsbereichs zu gewährleisten, folgt die Erfindung dem Grundgedanken, den Rotationskopf rotierbar um die Düse der Materialauftragseinrichtung anzuordnen, so dass Verdichtereinrichtung und Heizeinrichtung in Abhängigkeit der von der Materialauftragseinrichtung abzufahrenden Bahnkurve ausgerichtet werden können. Dies ist insbesondere bei der additiven Herstellung rotationssymmetrischer oder kreiszylindrischer Bauteile wesentlich, um eine stoffschlüssige Verbindung sowohl der aktuellen Schicht mit der zuletzt fertiggestellten Schicht als auch innerhalb der einzelnen Schichten zwischen den Materialsträngen herstellen zu können. Denn aufgrund der erfindungsgemäßen Materialauftragseinrichtung mit einem Rotationskopf kann sowohl die Verdichtereinrichtung als auch die Heizeinrichtung mittels des Rotationskopfs derart verschwenkt werden, dass in einfacher Art und Weise in Abhängigkeit vom Verfahrweg der Düse sowohl der gerade abgelegte Materialstrang verdichtet als auch der Materialauftragsbereich, in dem unmittelbar nachfolgend ein Materialstrang aufgebracht werden soll, erhitzt werden kann. Es wurde im Rahmen der Erfindung erkannt, dass eine Verdichtung sowie eine Erwärmung des Materialauftragsbereichs und ein gleichzeitiger Materialauftrag bei einer starren Anordnung von Düse, Verdichtereinrichtung und Heizeinrichtung, insbesondere bei der Herstellung rotationssymmetrischer oder kreiszylindrischer Bauteile, nicht möglich ist. Bevorzugt rotiert der Rotationskopf, insbesondere während des Materialauftrags, kontinuierlich um die Düse. Weiter bevorzugt ist der Rotationskopf mittels eines Rotationsantriebs kontinuierlich antreibbar. Durch Erwärmung des Materials mittels der Heizeinrichtung und Verdichtung des abgelegten Materialstrangs mittels der Verdichtereinrichtung können vorteilhafterweise vollbelastbare bzw. druckbelastbare Bauteile additiv hergestellt werden.

Die von der Vorrichtung zur additiven Herstellung eines, insbesondere rotationssymmetrischen, Bauteils umfasste Regeleinrichtung ist erfindungsgemäß dazu eingerichtet, zumindest den Rotationskopf und die Verdichtereinrichtung und die Heizeinrichtung zu regeln. Zudem ist es denkbar, dass die Regeleinrichtung die Materialauftragseinrichtung, insbesondere den Materialauftrag anhand des durch die Düse pro Zeiteinheit ausgegebenen Materialvolumens, regelt. Die Regelung des Rotationskopfs, insbesondere der Rotationsbewegung des Rotationskopfes, kann derart erfolgen, dass die Regeleinrichtung den Rotationskopf derart gegenüber der Düse und in Abhängigkeit des Verfahrwegs der Materialauftragseinrichtung rotiert, dass die Verdichtereinrichtung jederzeit, insbesondere zentriert, auf dem soeben abgelegten Materialstrang zur Anlage kommen kann. So kann vorteilhafterweise ein geregelter Fügedruck aufgebracht werden. Ebenfalls kann die Rotation des Rotationskopfs in der Art geregelt werden, dass die Heizeinrichtung jederzeit, insbesondere zentriert, auf den Materialauftragsbereich ausgerichtet ist. Dazu kann die Regeleinrichtung zur Verarbeitung von Daten zumindest bezüglich des Verfahrwegs und/oder der Verfahrgeschwindigkeit der Materialauftragseinrichtung eingerichtet sein. Zur anforderungsgemäßen Verdichtung eines abgelegten Materialstrangs ist es vorgesehen, dass die Regeleinrichtung zumindest die Anpressstärke der Verdichtereinrichtung, mit anderen Worten also die Druckaufbringung von oben auf den Materialstrang, regelt. Hierzu kann die Regeleinrichtung dazu eingerichtet sein, Daten bezüglich des Materialausgabevolumens aus der Düse und/oder bezüglich der Breite und/oder Höhe des aufgetragenen Materialstrangs zu verarbeiten. Weiter kann die Regeleinrichtung erfindungsgemäß die Heizleistung der Heizeinrichtung derart regeln, dass in Abhängigkeit von Material und Verfahrgeschwindigkeit eine ausreichende Erwärmung des Materialauftragsbereichs gewährleistet werden kann.

Vorteilhafte Ausführungsformen der Erfindung sind Gegenstand der abhängigen Ansprüche. In den Rahmen der Erfindung fallen zudem sämtliche Kombinationen aus mindestens zwei in der Beschreibung, den Ansprüchen und/oder den Figuren offenbarten Merkmalen. Es versteht sich, dass sich sämtliche zu der Vorrichtung offenbarten Merkmale und Ausführungsformen in äquivalenter, wenn auch nicht wortgleicher, Art und Weise auch auf das erfindungsgemäße Verfahren beziehen. Hierbei versteht es sich insbesondere, dass sprachübliche Umformungen und/oder ein sinngemäßes Ersetzen von jeweiligen Begrifflichkeiten im Rahmen der üblichen sprachlichen Praxis, insbesondere das Verwenden von durch die allgemein anerkannte Sprachliteratur gestützten Synonymen, von dem vorliegenden Offenbarungsgehalt umfasst sind, ohne in ihrer jeweiligen Ausformulierung explizit erwähnt zu werden.

Gemäß einer bevorzugten Ausgestaltung der Vorrichtung kann es vorgesehen sein, dass die Verdichtereinrichtung eine Verdichterrolle aufweist, die drehbar um eine Drehachse gelagert ist. Die Drehachse der Verdichterrolle läuft bevorzugt in einer x-y-Ebene und ist durch den rotierbaren Rotationskopf bevorzugt quer zur Materialbahn ausgerichtet. Mit einer derartigen Verdichterrolle kann auf einfache Art und Weise bei entsprechender Anlage der Verdichterrolle am Materialstrang durch einfaches Mitführen der Verdichterrolle mit der Materialauftragseinrichtung ein aufgetragener Materialstrang verdichtet werden, ohne dass Beschädigungen am bereits erstellten Bauteil hervorgerufen werden. Zudem kann vorteilhafterweise auf einen eigenen Antrieb der Verdichtereinrichtung verzichtet werden. In Abhängigkeit des aufzutragenden Materialstrangs, insbesondere dessen Höhe, können Düsenausgang und Verdichterrolle derart zueinander angeordnet werden, dass weder ein weiterer Antrieb zur Druckaufbringung in z-Richtung noch ein weiterer Antrieb zum Verfahren der Verdichterrolle in der x-y-Ebene notwendig ist.

Die Verdichtereinrichtung kann temperierbar, das heißt kühlbar und/oder heizbar sein. Bevorzugt ist die Verdichtereinrichtung wassergekühlt und/oder wassergeheizt. Weiter bevorzugt ist eine Verdichterrolle der Verdichtereinrichtung temperierbar. Die Kühlung der Verdichtereinrichtung führt vorteilhafterweise dazu, dass die zuvor erwärmten und nebeneinander- bzw. aufeinanderliegenden Materialstränge während der Druckaufbringung durch die Verdichtereinrichtung, bevorzugt unter ihre Kristallisationstemperatur, abkühlen und somit in Kombination mit der Druckaufbringung eine formstabile, stoffschlüssige Verbindung erzeugt werden kann. Es ist jedoch auch denkbar, dass eine Beheizung der Verdichtereinrichtung gewünscht ist, insbesondere wenn je nach Material ein langsames Abkühlen des Materialstrangs erforderlich ist, um ein unerwünschtes schockartiges Erstarren des Materialstrangs zu vermeiden.

Es hat sich als vorteilhaft erwiesen, dass die Heizeinrichtung ein Heizmodul zur kontaktlosen Erwärmung, insbesondere ein Infrarotheizmodul (14) und/oder ein Heißluftheizmodul, aufweist. Vorteilhafterweise kann mittels eines Infrarotheizmoduls Strahlungswärme auf den Materialauftragsbereich aufgebracht werden und somit das Bauteil berührungslos aufgeheizt werden, da das Infrarotheizmodul die im Strahlungsbereich befindlichen Gegenstände direkt erhitzt und nicht die umgebende Raumluft erhitzt. Der Strahlungsbereich des Infrarotheizmoduls kann zudem auf einfache Art und Weise angepasst und mittels der Regeleinrichtung geregelt werden, so dass je nach Bedarf nur der erforderliche Materialauftragsbereich erwärmt wird. Es ist jedoch auch denkbar, dass ein Heißluftheizmodul zur Erwärmung eingesetzt wird. Da das Heißluftmodul die Raumluft im Bauraum erhitzt, kann das Heißluftheizmodul neben der Erwärmung des Materialauftragsbereichs auch einen Beitrag zur Erwärmung des Bauraums leisten. Der Heißluftausstoß des Heißluftheizmoduls kann mittels der Regeleinrichtung geregelt werden, so dass die Intensität und die Ausrichtung des Heißluftausstoßes je nach Bedarf angepasst werden.

Die Vorrichtung kann eine Temperaturerfassungseinrichtung zur Erfassung zumindest der Temperatur eines abgelegten Materialstrangs umfassen. Bevorzugt ist die Temperaturerfassungseinrichtung an der Materialauftragseinrichtung, weiter bevorzugt am Rotationskopf, angeordnet und wird mit dieser entsprechend mitbewegt, so dass ein Temperatursensor der Temperaturerfassungseinrichtung in einfacher Art und Weise auf den zu erfassenden Bereich ausgerichtet werden kann. Weiter bevorzugt ist ein Temperatursensor der Temperaturerfassungseinrichtung als Infrarotsensor ausgebildet, wobei es denkbar ist, dass die Temperaturerfassungseinrichtung eine Wärmebildkamera umfasst. Um eine möglichst umfassende Regelung der Vorrichtung zur additiven Herstellung eines, insbesondere rotationssymmetrischen, Bauteils durch die Regeleinrichtung zu ermöglichen, ist die Regeleinrichtung dazu eingerichtet, die von der Temperaturerfassungseinrichtung erfassten Temperaturdaten zu verarbeiten und in Abhängigkeit der Temperaturdaten die Materialauftragseinrichtung, insbesondere die Heizleistung der Heizeinrichtung, den Materialauftrag der Materialauftragseinrichtung, die Temperierung des aufzutragenden Materials im Extruder, die Druckaufbringung durch die Verdichtereinrichtung und/oder die Temperierung der Verdichtereinrichtung, zu regeln. Um die additive Herstellung des, insbesondere rotationssymmetrischen, Bauteils möglichst genau protokollieren und regeln zu können und somit eine anforderungsgemäße Qualität des Bauteils zu gewährleisten, sind bevorzugt drei Temperatursensoren an der Materialauftragseinrichtung angeordnet. Ein erster Temperatursensor ist derart angeordnet, dass mittels dieses ersten Temperatursensors die Temperatur der zuletzt fertiggestellten Schicht erfasst werden kann und anhand von dessen Daten der Materialauftragsbereich mittels der Heizeinrichtung anforderungsgemäß erwärmt werden kann. Der zweite Temperatursensor kann die Temperatur des Materialauftragsbereichs nach dessen Erwärmung und vor Aufbringung des Materialstrangs erfassen. Der dritte Temperatursensor kann die Temperatur des abgelegten Materialstrangs hinter der Verdichtereinrichtung erfassen, das heißt nachdem der Materialstrang verdichtet wurde. Somit ist es möglich, anhand der Daten des ersten und zweiten Temperatursensors die Heizeinrichtung zu regeln und anhand der Daten des dritten Temperatursensors die Temperierung und/oder die Andruckkraft der Verdichtereinrichtung zu regeln. Weiter bevorzugt ist zumindest ein Temperatursensor, noch mehr bevorzugt alle Temperatursensoren, der Temperaturerfassungseinrichtung als Infrarotsensor ausgebildet, so dass die Temperatur berührungslos anhand reflektierter Strahlung gemessen werden kann.

Die Vorrichtung zur additiven Herstellung eines, insbesondere rotationssymmetrischen, Bauteils kann weiter eine Abstandserfassungseinrichtung zur Bestimmung des Abstands zwischen zumindest einem bereits aufgebrachten Materialstrang und einem Düsenausgang der Düse umfassen. Da die Position der Abstandserfassungseinrichtung und die Position des Düsenausgangs der Düse bekannt sind, kann mittels der Abstandserfassungseinrichtung durch Messung des Abstands zwischen Abstandserfassungseinrichtung und abgelegtem Materialstrang auf die aufgebrachte, in z-Richtung zu messende Schichthöhe rückgeschlossen werden. Einerseits kann, sofern die Abstandserfassungseinrichtung auf die zuletzt fertiggestellte Schicht des Bauteils gerichtet ist, die Schichthöhe dieser zuletzt fertiggestellten Schicht ermittelt werden. Andererseits kann, wenn die Abstandserfassungseinrichtung auf den in der aktuellen Schicht abgelegten Materialstrang gerichtet ist, die Schichthöhe der aktuellen Schicht ermittelt werden. Bevorzugt ist die Abstandserfassungseinrichtung auf den Materialauftragsbereich gerichtet und ermittelt somit die Schichtstärke der zuletzt fertiggestellten Schicht des Bauteils. Aufgrund der Daten der Abstandsmessung kann der Materialaustrag und/oder die Verdichtung des aufgetragenen Materialstrangs derart geregelt werden, dass eine gleichbleibende Schichthöhe über alle Schichten des Bauteils gewährleistet ist. Dabei wurde es erkannt, dass das Maß an Expansion des Kunststoffmaterials nach Austritt aus der Düse und/oder nach Auftrag auf Druckplatte oder Bauteil zu berücksichtigen ist, um einen Höhenausgleich, der eine gleichbleibende Schichthöhe über alle Schichten des Bauteils ermöglicht, zu ermitteln. Bevorzugt beträgt eine Schichthöhe zwischen 0,2 mm und 8mm. Weiter bevorzugt liegt die Schichthöhe der einzelnen Schichten des Bauteils im Bereich von 0,5 mm bis 4 mm.

Der Extruder der Materialauftragseinrichtung kann zur Verarbeitung von Granulat und/oder zur Verarbeitung von Filament eingerichtet sein. Als "Filament" wird im Rahmen der Erfindung ein fadenförmiges thermoplastisches Material bezeichnet, das in einer vorgelagerten Produktionsstufe gefertigt und somit als spulenaufgewickeltes Halbzeug der additiven Fertigung zugeführt werden kann. Filamente bieten vorteilhafterweise eine einfache Art der Verarbeitung, der Handhabung und der Lagerung. Es ist jedoch vorgesehen, dass bevorzugt Granulat im Extruder verarbeitet wird, da bei der Verarbeitung von Granulat eine größere Materialauswahl zur Verfügung steht und Granulat als Ausgangsmaterial kostengünstiger zu beschaffen ist. Zudem besteht bei der Verwendung von Granulat keine Abhängigkeit vom vorproduzierten Halbzeug, beispielsweise vom Durchmesser des fadenförmigen Materials, so dass höhere Produktionsgeschwindigkeiten und/oder größere Bauteile durch relativ einfache Anpassung des Düsenausgangs und/oder des Volumenstroms möglich sind. Auch ist es möglich, Granulat kontinuierlich dem Extruder zuzuführen, wodurch auf Rüstvorgänge, wie das Tauschen einer Filamentrolle, verzichtet werden kann. Zur Verarbeitung von Granulat kann der Extruder eine oberhalb der Düse angeordnete Extrusionsschnecke aufweisen. Die Extrusionsschnecke ist bevorzugt gegenüber der Rotationsachse des Rotationskopfs schräg gestellt, um das Einzugsverhalten der Extrusionsschnecke zu verbessern und eine Messung des Betriebsdrucks der Extrusionsschnecke zu ermöglichen. Denn bei Schrägstellung der Extrusionsschnecke kann am Ausgang der Extrusionsschnecke, das heißt am Übergang zur Düse der Materialauftragseinrichtung, ausreichend Raum bereitgestellt werden, um einen Drucksensor in diesem Raum anzuordnen. Weiter bevorzugt kann oberhalb der Extrusionsschnecke eine Dosiereinrichtung zur Zudosierung von Granulat angeordnet sein, welche zusammen mit der Materialauftragseinrichtung verfahren wird. Dies bietet den Vorteil, dass direkt an der Extrusionsschnecke zudosiert wird und somit Verluste oder Störungen aufgrund langer Leitungswege bei der Förderung von Granulat vermieden werden können oder zumindest die Zudosierung zur Extrusionsschnecke nicht beeinträchtigt wird. Bevorzugt führt die Dosiereinrichtung kontinuierlich Material zu.

Die Vorrichtung zur additiven Herstellung eines, insbesondere rotationssymmetrischen, Bauteils kann einen Drucktisch umfassen, auf dem eine Druckplatte anordenbar ist oder der selbst, insbesondere über die zum Bauraum weisende Oberfläche des Drucktischs, die Druckplatte ausbildet. Vorteilhafterweise ist der Drucktisch beheizbar und/oder weist eine Vakuumeinrichtung zur Festlegung der Druckplatte auf dem Drucktisch auf. Sofern die Druckplatte auf dem Drucktisch anordenbar ist, hat es sich als vorteilhaft erwiesen, dass eine Vakuumeinrichtung zur Festlegung der Druckplatte auf dem Drucktisch umfasst ist. Alternativ oder zusätzlich kann es vorgesehen sein, dass der Drucktisch beheizbar ist, wodurch auch die Druckplatte beheizt werden kann, um die Haftung des additiv aufzubauenden Bauteils, insbesondere von dessen erster Schicht, an der Druckplatte zu erhöhen. Weiter bevorzugt kann der Drucktisch eine Mehrzahl unabhängig voneinander beheizbarer Zonen aufweisen, so dass insbesondere hinsichtlich der Energieeffizienz der Anlage vorteilhafterweise nur der Bereich des Drucktischs beheizt werden muss, in dem ein Bauteil aufgebaut wird. So können nicht genutzte Bereiche der Druckplatte unbeheizt bleiben. Je nach Anforderungen ist es auch denkbar, dass die beheizbaren Zonen des Drucktisches unterschiedlich stark beheizt werden, das heißt, dass die Zonen unterschiedliche Temperaturen aufweisen. Als besonders vorteilhaft hat es sich erwiesen, wenn der Drucktisch neun beheizbare Zonen gleicher Größe aufweist. Es ist weiter denkbar, dass die Druckplatte als Opferplatte ausgebildet ist. Es ist dem Fachmann bekannt, dass eine Opferplatte zwischen Werkstück und Maschinenbasis, vorliegend also zwischen additiv aufzubauendem Bauteil und Drucktisch, angeordnet wird. Die Opferplatte ist dem Verschleiß ausgesetzt und wird daher nach mehreren Bearbeitungsgängen, vorliegend nach der additiven Fertigung mehrerer Bauteile, unbrauchbar und daher nach Erreichen einer Verschleißgrenze ausgetauscht. Die Druckplatte kann zudem zur besseren Haftung der ersten Schicht des additiv herzustellenden Bauteils eine verzahnte Oberfläche aufweisen.

Der Drucktisch kann eine Kompensationseinrichtung zur Kompensation thermisch bedingter Dimensionsänderungen aufweisen, wobei die Kompensationseinrichtung zumindest ein Festlager und ein Loslager aufweist. Dadurch, dass der Drucktisch mittels eines Festlagers und eines Loslagers befestigt, bevorzugt aufgehängt, ist, weist er ein relativ geringes Spiel, welches jedoch ausreichend ist, um thermische Einflüsse zu kompensieren, auf. Die Aufhängungen, nämlich das zumindest eine Festlager und das zumindest eine Loslager der Kompensationseinrichtung, sind bevorzugt in einer gemeinsamen Ebene, weiter bevorzugt in einer x-y-Ebene, angeordnet. Dabei erfolgt bevorzugt eine Kompensation der Ausdehnung des Drucktischs aufgrund thermischer Einflüsse in y-Richtung. Es ist denkbar, dass aufgrund der vorteilhaften Aufhängung über Festlager und Loslager eine Dimensionsänderung des Drucktischs von bis zu 2 mm, 3 mm, 4 mm oder 5 mm kompensiert werden kann.

Um den Bauraum der Vorrichtung vor äußeren Einflüssen, insbesondere Zugluft und Temperaturschwankungen, zu schützen, kann die Vorrichtung eine gegenüber der Umgebung abgeschlossene Fertigungskammer aufweisen. Die Fertigungskammer wird bevorzugt von dem Drucktisch und einem Gehäuse begrenzt. Das heißt mit anderen Worten, dass der Bauraum durch das Gehäuse umbaut ist und am Boden durch den Drucktisch begrenzt wird. Durch eine derartig abgeschlossene Fertigungskammer kann die Temperatur während des gesamten additiven Herstellungsprozesses eines Bauteils innerhalb der Fertigungskammer konstant gehalten werden, wodurch die Qualität sowie die Verbindung der einzelnen Schichten und der Materialstränge untereinander verbessert wird. Zudem ist es denkbar, dass die Fertigungskammer mit einer zusätzlichen Heizeinrichtung beheizt wird und/oder eine Lüftungseinrichtung zur aktiven Belüftung aufweist, um die Temperatur in der Fertigungskammer anforderungsgemäß, bevorzugt mittels der Regeleinrichtung, regeln zu können. Weiter ist es denkbar, dass ein additiv hergestelltes Bauteil nach und/oder während des Herstellprozesses in der Fertigungskammer getempert wird. Durch das Tempern, wobei ein Bauteil über einen längeren Zeitraum einer Wärmebehandlung ausgesetzt ist, können vorteilhafterweise Spannungen im Bauteil abgebaut werden. Bevorzugt weist die Fertigungskammer eine Höhe von zumindest 1400 mm, 1500 mm, 1600 mm oder 1700 mm auf. Weiter bevorzugt weist die Fertigungskammer eine durch die Druckplatte vorgegebene rechteckige Grundfläche auf, deren Seiten eine Länge von zumindest 1000 mm, 1100 mm, 1200 mm, 1300 mm, 1400 mm, 1500 mm, 1600 mm oder 1700 mm aufweisen. Am meisten bevorzugt ist die Druckplatte und somit die Grundfläche der Fertigungskammer quadratisch mit einer Seitenlänge von 1500 mm.

Es hat sich als vorteilhaft erwiesen, wenn die Regeleinrichtung dazu eingerichtet ist, die Rotationsgeschwindigkeit der Rotation des Rotationskopfs um die Düse derart in Abhängigkeit der Verfahrgeschwindigkeit der Materialauftragseinrichtung zu regeln, dass der Rotationskopf eine vollständige Rotation um die Düse vollführt, während die Materialauftragseinrichtung eine vollständige Windung um die Bauteilrotationsachse oder Bauteillängsachse abfährt. Dadurch ist es bei der additiven Herstellung von Bauteilen, und insbesondere bei rotationssymmetrischen oder kreiszylindrischen Bauteilen, sichergestellt, dass sowohl die Verdichtereinrichtung als auch die Heizeinrichtung jederzeit gegenüber der Düse, dem abgelegten Materialstrang und dem Materialauftragsbereich optimal ausgerichtet ist. Es ist bekannt, dass die Bauteillängsachse die Achse eines Körpers oder Bauteils bezeichnet, die der Richtung seiner größten Ausdehnung entspricht, wobei die Längsachse je nach Ausgestaltung des Bauteils mit der Symmetrieachse oder Rotationsachse des Bauteils zusammenfallen kann. Im Rahmen der Erfindung erstreckt sich die Bauteillängsachse bevorzugt in z-Richtung. Zudem wurde es erkannt, dass die Materialauftragseinrichtung vorteilhafterweise innerhalb einer Schicht in Windungen, bevorzugt kreisförmigen Windungen, also in der Art einer ebenen Spirale, während des Materialauftrags verfahren wird, so dass kein Abreißen des Materialstrangs oder ein Abtrennen des Materialstrangs innerhalb einer Schicht des Bauteils erforderlich ist. Dadurch kann wiederum die Stabilität innerhalb der Schicht eines Bauteils erhöht werden. Die Regeleinrichtung ist bevorzugt dazu eingerichtet, die Rotationsgeschwindigkeit des Rotationskopfs um die Düse nicht nur in Abhängigkeit der Verfahrgeschwindigkeit der Materialauftragseinrichtung zu regeln, sondern auch in Abhängigkeit der von der Materialauftragseinrichtung abzufahrenden Weglänge einer vollständigen Windung um die Bauteilrotationsachse oder Bauteillängsachse. Da die Verfahrgeschwindigkeit einstellbar ist und die Weglänge einer Windung um die Bauteilrotationsachse oder Bauteillängsachse vom herzustellenden Bauteil abhängig und daher auch bekannt ist, kann die Regeleinrichtung in einfacher Art und Weise diese sowieso bekannten Daten nutzen und zur Regelung der Rotationsgeschwindigkeit der Rotation des Rotationskopfs um die Düse verwenden, ohne dass eine weitere Messung oder Datenaufnahme notwendig wäre.

Ferner wird die oben genannte Aufgabe gelöst durch ein Verfahren zur additiven Herstellung eines, insbesondere rotationssymmetrischen oder kreiszylindrischen, Bauteils, wobei mittels einer Materialauftragseinrichtung zumindest ein Materialstrang zur Erzeugung des Bauteils schichtweise aufgebracht wird. Das Verfahren ist dadurch gekennzeichnet, dass ein Materialauftragsbereich mittels einer Heizeinrichtung erwärmt wird und ein aufgetragener Materialstrang mittels einer an einem Rotationskopf angeordneten Verdichtereinrichtung verdichtet und mit zumindest einem weiteren Materialstrang stoffschlüssig verbunden wird, wobei die Verdichtereinrichtung entlang des abgelegten Materialstrangs unter Druckaufbringung bewegt wird, und wobei der Rotationskopf um eine Düse der Materialauftragseinrichtung während des Verfahrens der Materialauftragseinrichtung rotiert wird.

Die besondere erfindungsgemäße Leistung des Verfahrens besteht also darin, dass, wie oben bereits angedeutet, ein Materialstrang auf einen zuvor erwärmten Materialauftragsbereich aufgebracht wird und anschließend mittels der Verdichtereinrichtung einerseits selbst verdichtet und andererseits mit zumindest einem weiteren Materialstrang, bevorzugt mit den in der x-y-Ebene sowie in z-Richtung benachbarten Materialsträngen, stoffschlüssig verbunden wird. Dabei hat es sich als vorteilhaft erwiesen, dass die Verdichtereinrichtung entlang des abgelegten Materialstrangs unter Druckaufbringung bewegt wird und der Rotationskopf um eine Düse der Materialauftragseinrichtung während des Verfahrens der Materialauftragseinrichtung rotiert wird. Mit anderen Worten fährt die Materialauftragseinrichtung zur additiven Herstellung des Bauteils innerhalb einer Schicht je nach Bauteilgeometrie zumindest eine Bahnkurve ab und bringt währenddessen zumindest einen Materialstrang auf eine Druckplatte auf. Gleichzeitig rotiert der an der Materialauftragseinrichtung und somit mit der Materialauftragseinrichtung mitbewegte Rotationskopf derart um die Düse der Materialauftragseinrichtung, dass mittels der Verdichtereinrichtung ein regelbarer Fügedruck aufgebracht werden kann und somit der gerade abgelegte Materialstrang verdichtet werden kann, und mittels einer Heizeinrichtung der als nächstes anzufahrende Abschnitt der Bahnkurve, der Materialauftragsbereich, erwärmt werden kann. Durch die Erwärmung des Materialauftragsbereichs und die Verdichtung mittels der Verdichtereinrichtung kann ein besonders stabiles, druckbelastbares Bauteil aufgrund der stoffschlüssigen Verbindung der Materialstränge innerhalb einer Schicht und zwischen den Schichten hergestellt werden.

Grundsätzlich soll zur Vermeidung unnötiger Wiederholungen im Hinblick auf die Merkmale, Eigenschaften und Vorteile des erfindungsgemäßen Verfahrens auf die obige Offenbarung der Vorrichtung Bezug genommen werden. Dies bedeutet, dass grundsätzlich vorrichtungsmäßig offenbarte und beschriebene Merkmale als verfahrensmäßig beschrieben und beanspruchbar gelten sollen und umgekehrt.

Hinsichtlich eines durchgehenden Materialstrangs innerhalb einer Schicht und somit einer erhöhten Bauteilstabilität hat es sich als vorteilhaft erwiesen, dass der Materialstrang in Windungen, bevorzugt in der Art einer ebenen Spirale, mittels der Materialauftragseinrichtung innerhalb einer Schicht aufgebracht wird. Bevorzugt sind die Vorrichtung sowie das Verfahren so ausgelegt, dass eine Schicht innerhalb der x-y-Ebene aufgebaut wird und das herzustellende Bauteil aus mehreren Schichten, die in z-Richtung übereinander abgelegt werden, erstellt wird. Durch das Verfahren der Materialauftragseinrichtung in Windungen, bevorzugt spiralförmig, kann ein Abreißen des Materialstrangs innerhalb einer Schicht vorteilhafterweise verhindert werden und somit die Stabilität des Bauteils erhöht werden.

Gemäß einer bevorzugten Ausführung des Verfahrens kann es vorgesehen sein, dass der Rotationskopf einmal vollständig um die Düse rotiert wird, während die Materialauftragseinrichtung entlang einer vollständigen Windung um eine Bauteilrotationsachse oder Bauteillängsachse verfahren wird. Hierdurch kann eine optimale Ausrichtung der Verdichtereinrichtung und der Heizeinrichtung gegenüber der Düse, dem Materialauftragsbereich sowie dem bereits abgelegten Materialstrang sichergestellt werden.

Als vorteilhaft hat es sich erwiesen, wenn der Materialstrang mittels der Verdichtereinrichtung zu einer Breite von 4 mm bis 30 mm verdichtet wird. Da die Druckaufbringung durch die Verdichtereinrichtung in z-Richtung erfolgt, ist die Breite des verdichteten Materialstrangs in einer x-y-Ebene zu messen. Bevorzugt wird der Materialstrang mittels der Verdichtereinrichtung zu einer Breite von 6 mm, 8 mm, 10 mm, 12 mm, 14 mm, 16 mm, 18 mm, 20 mm oder 22 mm verdichtet.

Die Breite des verdichteten Materialstrangs kann über die mittels eines Extruders einer Düse der Materialauftragseinrichtung zugeführte Materialmenge und/oder über die Druckaufbringung mittels der Verdichtereinrichtung gesteuert werden. Es ist dem Fachmann bekannt, dass es sich bei der zugeführten Materialmenge um die Materialmenge pro Zeiteinheit handelt, die der Düse zur Ablage eines Materialstrangs bereitgestellt wird. Es ist somit ersichtlich, dass, je mehr Materialmenge der Düse der Materialauftragseinrichtung zugeführt wird, desto größer das Volumen des aufgetragenen Materialstrangs wird. Weiter wurde es erkannt, dass, je größer das Volumen des aufgetragenen Materialstrangs ist, desto breiter auch der verdichtete Materialstrang ist. Es wäre denkbar, das Volumen des aufzubringenden Materialstrangs anhand des Düsendurchmessers einzustellen, wobei es sich jedoch als vorteilhaft erwiesen hat, die der Düse zugeführte Materialmenge anhand der Förderleistung eines Schneckenantriebs des Extruders zu regeln. Dies erlaubt eine Regelung in einfacher Art und Weise, wobei Rüstvorgänge, zum Beispiel durch den Austausch einer Düse, vermieden werden können.

Als Material zur Herstellung des Bauteils kann ein unverstärkter teilkristalliner Werkstoff verwendet werden. Bevorzugt kann Polyethylen (PE), Polypropylen (PP), Polyvinylidenfluorid (PVDF), Polyamid (PA) oder Polyoxymethylen (POM) verwendet werden. Weiter bevorzugt wird Polyethylen, Polypropylen oder Polyvinylidenfluorid verwendet. Zur Verarbeitung einer möglichst großen Materialauswahl sind die Materialien in der Materialauftragseinrichtung auf bis zu 350° C erhitzbar und dadurch auch Materialien mit einer entsprechenden Schmelztemperatur verarbeitbar. Polyethylen wird bevorzugt bei einer Temperatur von 300° C bis 340° C, weiter bevorzugt bei 310° C bis 330° C, verarbeitet. Polypropylen wird bevorzugt bei einer Temperatur von 190° C bis 230° C, weiter bevorzugt bei einer Temperatur von 200° C bis 220° C, verarbeitet. Polyvinylidenfluorid wird bevorzugt bei einer Temperatur von 210° C bis 280° C, weiter bevorzugt bei einer Temperatur von 230° C bis 260° C, verarbeitet.

Erfindungsgemäß ist weiterhin ein, insbesondere rotationssymmetrisches, Bauteil, hergestellt nach dem erfindungsgemäßen Verfahren, vorgeschlagen, welches in der Art eines hohlzylindrischen Rohrs oder Rohrabschnitts ausgebildet ist. Derartige Bauteile können mit dem erfindungsgemäßen Verfahren besonders widerstandsfähig und in einfacher Art und Weise hergestellt werden. Aufgrund der Verbindung der Materialstränge innerhalb einer Schicht miteinander und der Verbindung der einzelnen Schichten des Bauteils untereinander sind die mit dem erfindungsgemäßen Verfahren hergestellten hohlzylindrischen Rohre oder Rohrabschnitte zur Leitung von Fluiden geeignet.

Vorteilhafterweise kann das, insbesondere rotationssymmetrische, Bauteil bis mindestens 16 bar druckbelastbar sein. Diese relativ hohe Druckfestigkeit des Bauteils, hervorgerufen durch die stoffschlüssige Verbindung innerhalb der einzelnen Schichten und zwischen den mehreren Schichten des Bauteils, erlaubt einen Einsatz des Bauteils in anspruchsvollen Anwendungen. Das Bauteil kann beispielsweise zur Leitung unter Druck stehender Fluide und/oder in anspruchsvollen Umgebungen, beispielsweise erdumgeben, eingesetzt werden.

Die Wandstärke des Bauteils kann zwischen 5 mm und 400 mm betragen, und das Bauteil kann einen äußeren Durchmesser zwischen 90 mm und 1400 mm aufweisen, wobei das Bauteil eine Höhe von bis zu 1500 mm aufweisen kann. Somit können sowohl relativ kleine hohlzylindrische Rohre oder Rohrabschnitte hergestellt werden als auch Rohre oder Rohrabschnitte mit relativ großen Abmessungen. Aufgrund des schichtweisen und werkzeuglosen Aufbaus des Bauteils können die Abmessungen des Bauteils sowie die Wandstärken des Bauteils unabhängig von Werkzeugen, beispielsweise Formwerkzeugen, festgelegt werden.

Es wird davon ausgegangen, dass die Definitionen und/oder die Ausführungen der oben genannten Begriffe für alle in der Beschreibung beschriebenen Aspekte gelten, sofern nichts anderes angegeben ist.

Weitere Einzelheiten, Merkmale und Vorteile der Erfindung ergeben sich aus der nachfolgenden Beschreibung bevorzugter Ausführungsbeispiele in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktion einander entsprechende Elemente. Die folgenden Ausführungsbeispiele dienen lediglich dazu, die Erfindung zu illustrieren. Sie sollen den Gegenstand der Patentansprüche in keiner Weise beschränken.

Im Einzelnen zeigen:
- **Fig. 1**: eine erfindungsgemäße Vorrichtung in perspektivischer Ansicht;
- **Fig. 2**: die erfindungsgemäße Vorrichtung aus Fig. 1 in Ansicht von vorne;
- **Fig. 3**: die erfindungsgemäße Vorrichtung aus Fig. 1 in seitlicher Ansicht;
- **Fig. 4**: die erfindungsgemäße Vorrichtung aus Fig. 1 in Ansicht von oben;
- **Fig. 5**: die Materialauftragseinrichtung einer erfindungsgemäßen Vorrichtung in perspektivischer Ansicht;
- **Fig. 6**: einen unteren Abschnitt einer erfindungsgemäßen Materialauftragseinrichtung in Schnittdarstellung;
- **Fig. 7**: einen unteren Abschnitt einer erfindungsgemäßen Materialauftragseinrichtung; und
- **Fig. 8**: eine Heizeinrichtung und Temperaturerfassungseinrichtung einer erfindungsgemäßen Vorrichtung in Explosionsdarstellung.

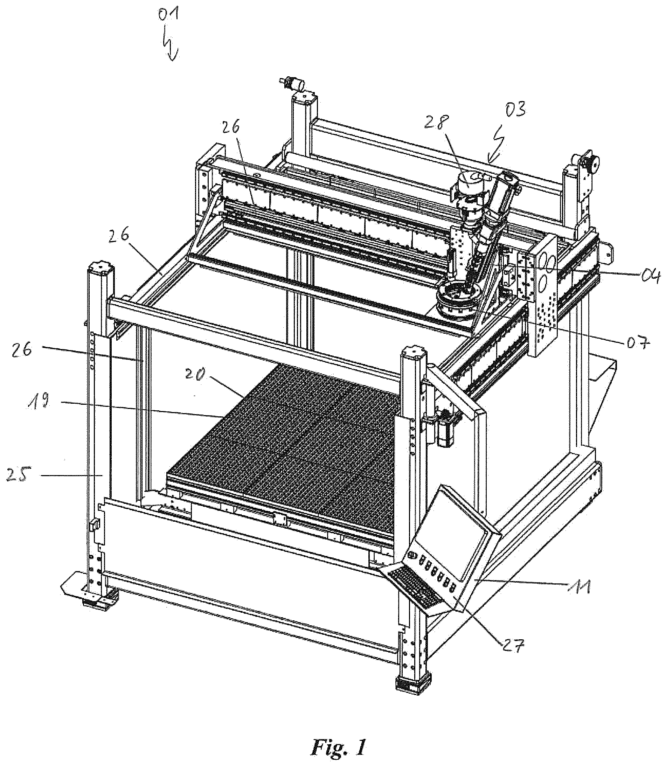

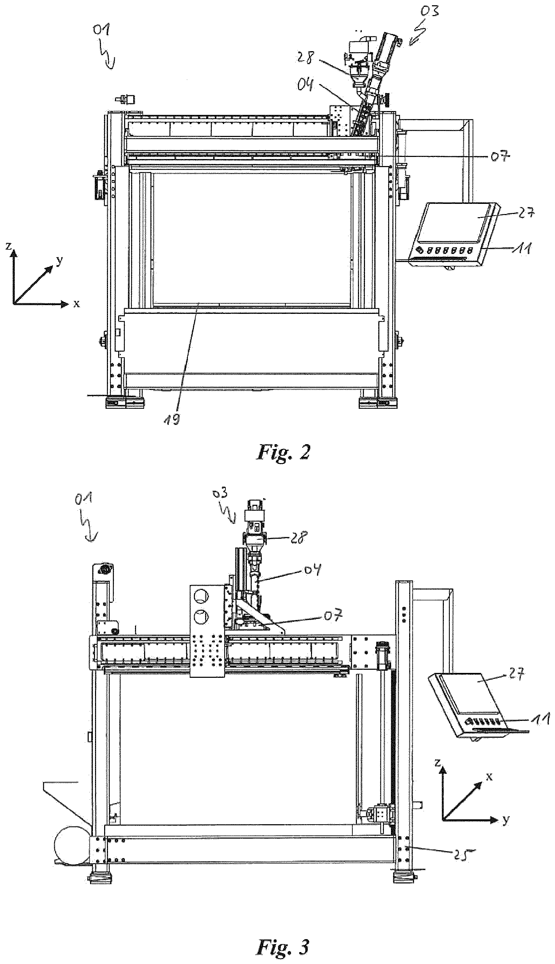

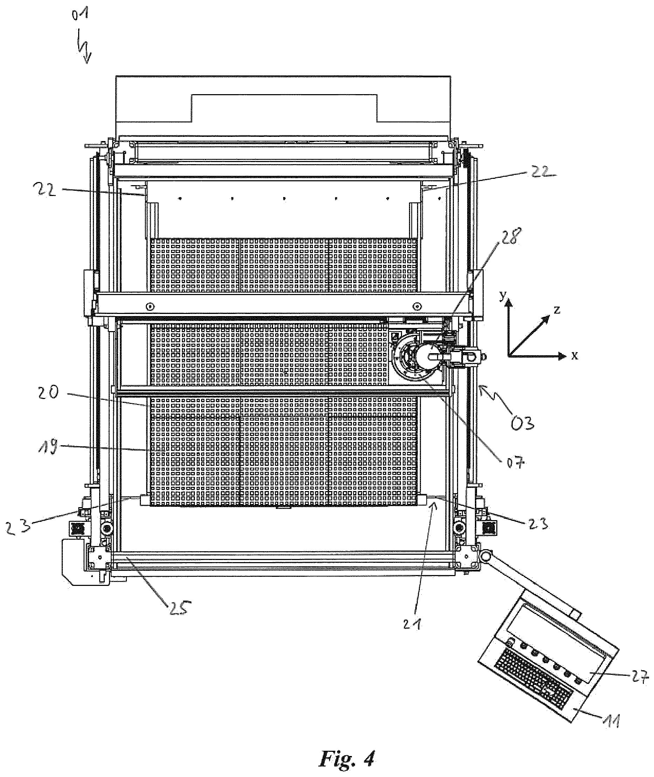

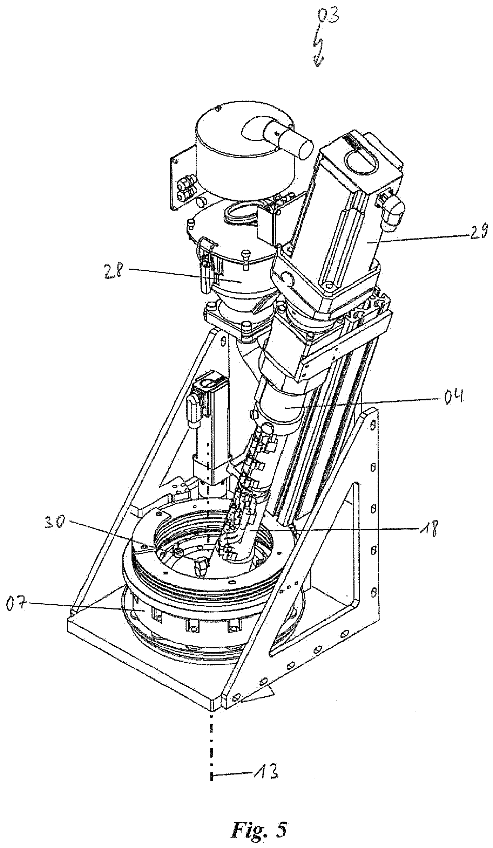

Die **Figuren 1** bis **4** zeigen eine Ausführungsform der erfindungsgemäßen Vorrichtung zur additiven Herstellung eines, insbesondere rotationssymmetrischen, Bauteils in unterschiedlichen Ansichten. Der Zusammenschau der **Figuren 1** bis **4** ist der Aufbau der Vorrichtung sowie der Grundgedanke der Erfindung zu entnehmen. Die Vorrichtung weist ein Gestell 25 auf, in dem Linearführungen 26 zum Verfahren des Drucktischs 19 sowie der Materialauftragseinrichtung 03 angeordnet sind. Es ist zu erkennen, dass die Materialauftragseinrichtung 03 in x-y-Richtung verfahrbar ist, wobei der Drucktisch 19 in z-Richtung anhebbar und absenkbar ist. Auf dem Drucktisch 19 kann eine hier nicht dargestellte Druckplatte angeordnet und mittels der Vakuumeinrichtung 20 am Drucktisch 19 gehaltert werden. Der Aufbau des in den Fig. 1 bis 5 nicht dargestellten Bauteils 02 erfolgt dann schichtweise auf der Druckplatte, wobei das Bauteil 02 in z-Richtung aufgebaut wird. Weiter ist der Zusammenschau der **Figuren 1** bis **4** zu entnehmen, dass die Materialauftragseinrichtung 03 einen Rotationskopf 07, einen Extruder 04 sowie eine Dosiereinrichtung 28 zur Zuführung von granulatförmigem Material zum Extruder 04 aufweist. Detaillierter wird auf den Aufbau der Materialauftragseinrichtung 03 anhand der **Figuren 5** bis **8** eingegangen. Es ist denkbar, dass die Regeleinrichtung 11, wie im dargestellten Ausführungsbeispiel, in ein Bedienpult integriert ist oder aber an anderer Stelle an der Vorrichtung 01 angeordnet oder beabstandet zur Vorrichtung 01 angeordnet ist. Wesentlich ist es, dass eine Datenverbindung zwischen der Regeleinrichtung 11 und den zu regelnden Bestandteilen der Vorrichtung 01, insbesondere der Materialauftragseinrichtung 03, kabellos und/oder kabelgebunden hergestellt werden kann.

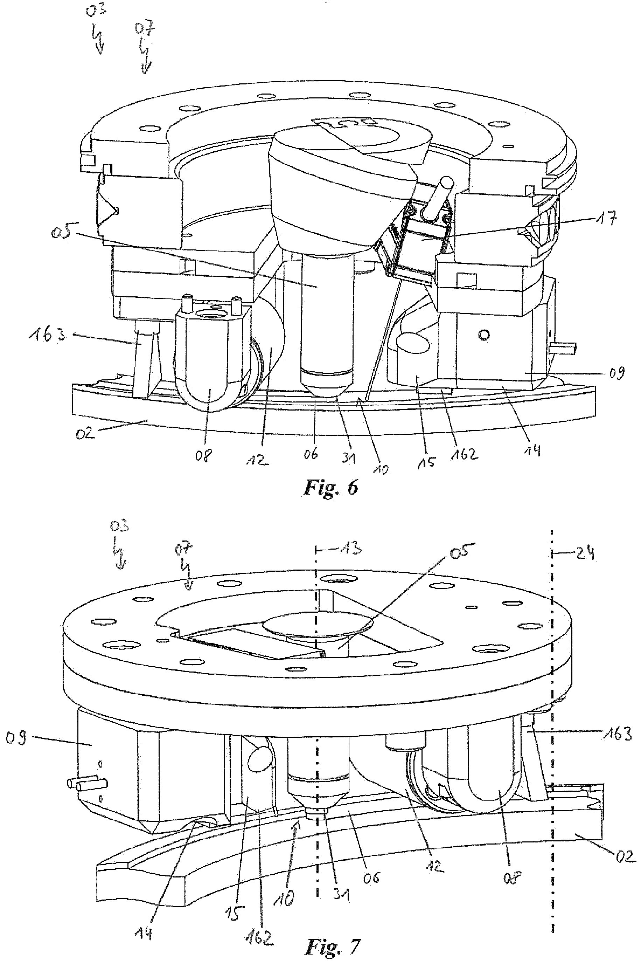

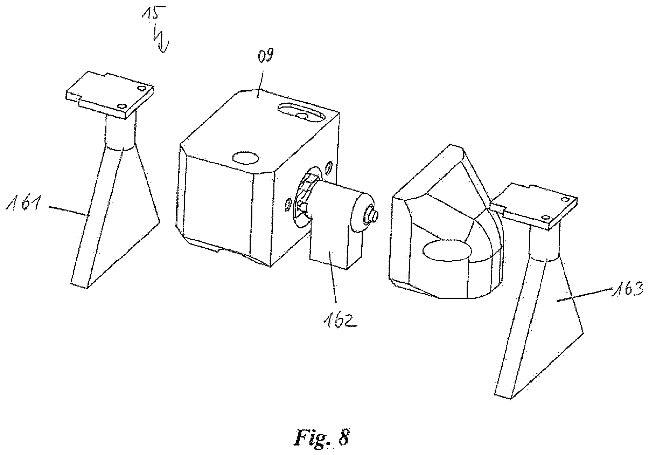

**Fig. 5** zeigt die Materialauftragseinrichtung 03 in perspektivischer Ansicht. Der Rotationskopf 07 ist drehbar um eine hier nicht sichtbare Düse 05, deren Symmetrieachse, wie der nachfolgenden **Fig. 7** zu entnehmen ist, mit der Rotationsachse 13 des Rotationskopfs 07 zusammenfällt, angeordnet. Deutlich zu erkennen ist in der **Fig. 5****,** dass der Extruder 04 mit der Extrusionsschnecke 18 und dem Extruderantrieb 29 gegenüber der Rotationsachse 13 des Rotationskopfs 07 schräggestellt ist, so dass ein optimales Einzugsverhalten des aus der Dosiereinrichtung 28 zugeführten Granulats möglich ist, sowie die Messung des Betriebsdrucks in der Extrusionsschnecke 18 mittels der Betriebsdruckmesseinrichtung 30 durchgeführt werden kann. Einer Zusammenschau der **Figuren 6** und **7** kann der Aufbau des Rotationskopfs 07 der Materialauftragseinrichtung 03 entnommen werden. Der Rotationskopf 07 ist um die Rotationsachse 13, die mit der Symmetrieachse der Düse 05 zusammenfällt, drehbar an der Materialauftragseinrichtung 03 angeordnet. Mittels der Düse 05 wird ein Materialstrang 06 aus dem Düsenausgang 31 abgegeben und somit das Bauteil 02 aufgebaut. Dabei wird der Materialauftragsbereich, auf dem nachfolgend ein neuer Materialstrang 06 mittels der Düse 05 abgelegt wird, mittels der Heizeinrichtung 09 erwärmt, so dass eine stoffschlüssige Verbindung des neu abgelegten Materialstrangs 06 mit den bereits in der aktuell zu fertigenden Schicht abgelegten Materialsträngen sowie mit den bereits gefertigten Schichten des Bauteils 02 erfolgen kann. Anhand der Daten der Abstandserfassungseinrichtung 17, die den Abstand zwischen Abstandserfassungseinrichtung 17 und zuletzt fertiggestellter Schicht erfasst und somit einen Rückschluss auf den Abstand zwischen Düsenausgang 31 und zuletzt fertiggestellter Schicht zulässt, kann die Düse 05 derart positioniert und/oder der Materialvolumenstrom derart geregelt werden, dass jede Schicht die gleiche Höhe aufweist. Der abgelegte Materialstrang 06 wird durch die Verdichterrolle 12, die um eine in einer x-y-Ebene angeordnete Drehachse drehbar ist, verdichtet, wobei aufgrund der Druckaufbringung durch die Verdichterrolle 12 nicht nur eine Verbindung mit den bereits abgelegten Materialsträngen der aktuell zu fertigenden Schicht, sondern auch eine Verbindung mit der darunterliegenden zuletzt fertiggestellten Schicht erfolgt. Die Temperaturerfassungseinrichtung 15 kann der, hier nicht dargestellten, Regeleinrichtung 11 weitere Daten zur Verfügung stellen. Es ist vorgesehen, dass die Temperatur mittels Infrarotsensoren 161, 162, 163 berührungslos erfasst wird, wobei der Temperatursensor 163 hier aufgrund des begrenzten Ausschnitts aus der Materialauftragseinrichtung 03 nicht gezeigt ist, jedoch aus der **Fig. 8** hervorgeht. Somit ist es aufgrund der Zusammenschau der **Figuren 6** bis **8** erkennbar, dass die Temperatur des Materialauftragsbereichs 10 vor Erwärmen des Materialauftragsbereichs 10 mittels der Heizeinrichtung 09 anhand des Temperatursensors 161 erfasst wird und nach Erwärmen mittels der Heizeinrichtung 09 anhand des Temperatursensors 162 erneut erfasst wird. Dies lässt Rückschlüsse auf die Heizleistung der Heizeinrichtung 09 zu, so dass die Heizeinrichtung 09 anhand der von den Temperatursensoren 161 und 162 erfassten Temperaturen geregelt werden kann. Der weitere Infrarotsensor 163 der Temperaturerfassungseinrichtung 15 dient der Temperaturerfassung des abgelegten Materialstrangs 06 nach dessen Verdichtung. Die Daten des weiteren Infrarotsensors 163 können beispielsweise dazu genutzt werden, die Temperierung der Verdichterrolle 12 zu regeln. Durch die erfindungsgemäße rotierbare Anordnung der Bestandteile des Rotationskopfs 07 um die Rotationsachse 13, die mit der Symmetrieachse der Düse 05 zusammenfällt, ist es möglich, die Rotation des Rotationskopfs 07 um die Düse 05 derart zu regeln, dass der Rotationskopf 07 einmal vollständig um die Düse 05 rotiert wird, während die Materialauftragseinrichtung 03 zusammen mit dem Rotationskopf 07 eine vollständige Windung um die Bauteilrotationsachse 24 abfährt bzw. eine Kreisbahn beschreibt. Aufgrund der beschriebenen Rotation des Rotationskopfs 07 und der entsprechenden Anordnung der Bestandteile des Rotationskopfs 07 gegenüber der Düse 05 sind sowohl die Verdichtereinrichtung, die Abstandserfassungseinrichtung 17, die Temperaturerfassungseinrichtung 15 als auch die Heizeinrichtung 09 jederzeit optimal ausgerichtet.

**Fig. 8** zeigt die Heizeinrichtung 09 sowie die Bestandteile der Temperaturerfassungseinrichtung 15 in Explosionsdarstellung. In dieser Darstellung sind die drei Infrarotsensoren 161, 162, 163 der Temperaturerfassungseinrichtung 15 ersichtlich. Weiter ist es ersichtlich, dass ein Temperatursensor an der Heizeinrichtung 09 angeordnet ist, um Bauraum einsparen und möglichst nah an der Heizeinrichtung 09 die Temperatur messen zu können.

## Patentansprüche

1. Vorrichtung (01) zur additiven Herstellung eines, insbesondere rotationssymmetrischen, Bauteils (02), aufweisend eine in zumindest zwei Achsen verfahrbare Materialauftragseinrichtung (03) mit einem Extruder (04) und einer Düse (05) zum Auftrag eines Materialstrangs (06),
**dadurch gekennzeichnet,**
**dass** an der Materialauftragseinrichtung (03) ein Rotationskopf (07) mit einer Verdichtereinrichtung (08) zur Verdichtung eines Materialstrangs (06) und einer Heizeinrichtung (09) zur Erwärmung zumindest eines Materialauftragsbereichs (10) angeordnet ist, wobei der Rotationskopf (07) um die Düse (05) rotierbar ist, und wobei eine Regeleinrichtung (11) umfasst ist, die dazu eingerichtet ist, zumindest den Rotationskopf (07) und die Verdichtereinrichtung (08) und die Heizeinrichtung (09) zu regeln.

2. Vorrichtung nach Anspruch 1,
**dadurch gekennzeichnet,**
**dass** die Verdichtereinrichtung (08) eine Verdichterrolle (12) aufweist, die drehbar um eine Drehachse (32) gelagert ist, und/oder dass die Verdichtereinrichtung (08) kühlbar und/oder beheizbar ist.

3. Vorrichtung nach einem der Ansprüche 1 oder 2,
**dadurch gekennzeichnet,**
**dass** die Heizeinrichtung (09) ein Heizmodul zur kontaktlosen Erwärmung, insbesondere ein Infrarotheizmodul (14) und/oder ein Heißluftheizmodul, aufweist.

4. Vorrichtung nach einem der Ansprüche 1 bis 3,
**dadurch gekennzeichnet,**
**dass** eine Temperaturerfassungseinrichtung (15) zur Erfassung zumindest der Temperatur eines abgelegten Materialstrangs (06), bevorzugt mittels eines Infrarotsensors (16), umfasst ist.

5. Vorrichtung nach einem der Ansprüche 1 bis 4,
**dadurch gekennzeichnet,**
**dass** eine Abstandserfassungseinrichtung (17) zur Bestimmung des Abstands zwischen zumindest einem bereits aufgebrachten Materialstrang und einem Düsenausgang (31) der Düse (05) umfasst ist.

6. Vorrichtung nach einem der Ansprüche 1 bis 5,
**dadurch gekennzeichnet,**
**dass** der Extruder (04) zur Verarbeitung von Granulat und/oder Filament eingerichtet ist, wobei der Extruder (04) bevorzugt eine Extrusionsschnecke (18) aufweist.

7. Vorrichtung nach einem der Ansprüche 1 bis 6,
**dadurch gekennzeichnet,**
**dass** ein Drucktisch (19), auf dem eine Druckplatte anordenbar ist oder der die Druckplatte ausbildet, umfasst ist, wobei der Drucktisch (19) beheizbar ist und/oder eine Vakuumeinrichtung (20) zur Festlegung der Druckplatte auf dem Drucktisch (19) aufweist.

8. Vorrichtung nach Anspruch 7,
**dadurch gekennzeichnet,**
**dass** der Drucktisch (19) eine Kompensationseinrichtung (21) zur Kompensation thermisch bedingter Dimensionsänderungen aufweist, wobei die Kompensationseinrichtung (21) zumindest ein Festlager (22) und ein Loslager (23) aufweist.

9. Vorrichtung nach einem der Ansprüche 1 bis 8,
**dadurch gekennzeichnet,**
**dass** die Regeleinrichtung (11) dazu eingerichtet ist, die Rotationsgeschwindigkeit der Rotation des Rotationskopfes (07) um die Düse (05) derart in Abhängigkeit der Verfahrgeschwindigkeit der Materialauftragseinrichtung (03) zu regeln, dass der Rotationskopf (07) eine vollständige Rotation um die Düse (05) vollführt, während die Materialauftragseinrichtung (03) eine vollständige Windung um die Bauteilrotationsachse (24) abfährt.

10. Verfahren zur additiven Herstellung eines, insbesondere rotationssymmetrischen, Bauteils (02), wobei mittels einer Materialauftragseinrichtung (03) zumindest ein Materialstrang (06) zur Erzeugung des Bauteils (02) schichtweise aufgebracht wird,
**dadurch gekennzeichnet,**
**dass** ein Materialauftragsbereich (10) mittels einer Heizeinrichtung (09) erwärmt wird und
ein aufgetragener Materialstrang (06) mittels einer an einem Rotationskopf (07) angeordneten Verdichtereinrichtung (08) verdichtet und mit zumindest einem weiteren Materialstrang stoffschlüssig verbunden wird, wobei der Rotationskopf (07) um eine Düse (04) der Materialauftragseinrichtung (03) während des Verfahrens der Materialauftragseinrichtung (04) rotiert wird.

11. Verfahren nach Anspruch 10,
**dadurch gekennzeichnet,**
**dass** ein Materialstrang (06) in Windungen, bevorzugt in der Art einer ebenen Spirale, mittels der Materialauftragseinrichtung (03) innerhalb einer Schicht aufgebracht wird.

12. Verfahren nach Anspruch 10 oder 11,
**dadurch gekennzeichnet,**
**dass** der Rotationskopf (07) einmal vollständig um die Düse (04) rotiert wird, während die Materialauftragseinrichtung (03) entlang einer vollständigen Windung um eine Bauteilrotationsachse (24) oder Bauteillängsachse verfahren wird.

13. Verfahren nach einem der Ansprüche 10 bis 12,
**dadurch gekennzeichnet,**
**dass** die Breite des verdichteten Materialstrangs (06) über die mittels eines Extruders (04) der Materialauftragseinrichtung (03) der Düse (05) zugeführte Materialmenge und/oder über die Druckaufbringung mittels der Verdichtereinrichtung (08) gesteuert wird.

14. Bauteil (02), insbesondere rotationssymmetrisches Bauteil (02), hergestellt mit einem Verfahren nach einem der vorhergehenden Ansprüche,
**dadurch gekennzeichnet,**
**dass** das Bauteil (02) in der Art eines hohlzylindrischen Rohres oder Rohrabschnitts ausgebildet ist.

15. Bauteil nach Anspruch 14,
**dadurch gekennzeichnet,**
**dass** das Bauteil (02) bis mindestens 16 bar druckbelastbar ist und/oder das Bauteil (02) eine Wandstärke zwischen 5 mm und 400 mm und/oder das Bauteil (02) einen äußeren Durchmesser zwischen 90 mm und 1400 mm und/oder das Bauteil (02) eine Höhe von bis zu 1500 mm aufweist.
